# EUROPEAN PATENT APPLICATION

(11) **EP 1 982 597 A1**
(43) Date of publication of application: **22.10.2008**
(21) Application number: 07106655.9
(22) Date of filing: 20.04.2007
(51) Int. Cl.: A21D 2/16, A21D 2/18, A21D 8/04, A21D 13/06, A23D 7/005, A23D 7/01

(54) **Fat replacer for bakery and patisserie applications**

(71) Applicant: PURATOS N.V., 1702 Groot-Bijgaarden (BE)
(72) Inventor: Surdiacourt, Christophe, 9661 Parike (BE); Agache, Evelien, 9031 Drogen (BE); Deledicque, Catherine, 1120 Brussels (BE)
(74) Representative: pronovem

(57) **Abstract**

The present invention relates to an edible fat replacer composition and its use in different food applications, in particular in bakery and patisserie applications.

The present invention further relates to a method for the preparation of said composition.

The present invention also relates to food products comprising said composition.

## Description

### Field of the invention

The present invention relates to an edible fat replacer composition and its use in different food applications, in particular in bakery and patisserie applications.

The present invention further relates to a method for the preparation of said composition.

### Background

Traditionally, certain bakery and confectionary products are prepared using fat. Fats and oils give to these products their specific flavour, texture and taste. Fats bring to a baked product more freshness, a shorter bite, more moistness & smoothness in the crumb and a melting mouthfeel.

On the other hand, there is a trend to try to reduce as much as possible the consumption of fat in a health conscious diet. More and more people are modifying their dietary habits and eating less fat.

Furthermore, fat reduction may be required by the manufacturer (artisan, industrial baker, etc.), for example to reduce the costs.

Nevertheless, fats or oils reduction in the recipe results in products of lower quality, chewy, flavorless, dry, and unappetizing.

The task of simulating the characteristics of fats and/or oils in bakery products (when fats and/or oils are eliminated or reduced) remains a difficult challenge.

Indeed, the organoleptic properties of the finished good may not be altered, in particular, the taste and texture may not be sacrificed.

In EP 528902, the use of dietary fibers and digestible starch to reduce the fat content in cakes, cookies and other types of bakery products is described.

In WO94/21128, the use of maltodextrin and beta-glucans or pentosans as fat replacer in laminated dough is described.

In US 5395638, is described a reduced fat roll-in shortening spread containing 48 to 65% shortening.

In US 5480670 is described a low fat dairy lightener containing whey protein, butter fat and optionally emulsifiers and or polysaccharides such as K carrageenan.

In US 5102680 is described a reduced fat ready-to-spray frosting composition that contains together with the shortening a mixture of emulsifiers and gelling agent.

In US 5576043 is described a shortening substitute that replaces 75% to 95% of the shortening by starch, modified starch and emulsifiers.

In US 5695806 is described a low fat substitute or mixture that may contain very low level of butter but does not contain any emulsifier.

In US 6030654 are described baking compositions for chemically leavened products comprising optionally a fat replacer such as e.g. hydrolyzed starches, protein concentrates, hydrocolloids, emulsifying agents (including monoglyceride), cellulose or cellulose derivatives, fats with low caloric value or a combination of these but still in combination with a certain amount of shortening.

In US Patent 6048564 is described a composition useful as reduced fat shortening substitute, which comprise a gel from an aqueous phase (water and konjac) and a lipid phase consisting of fat or oil.

Reducing fat continues to be a priority for the baking industry and providing a fat replacer exhibiting all the functional attributes generally associated with fats remains an aim of the baking industry.

### Summary of the invention

The present invention provides an edible fat replacer composition comprising water, a mixture of mono- and diglycerides, and at least one gum.

More particularly, a fat replacer composition of the invention comprises (or consists of) water and a mixture of mono- and diglycerides, both components representing more than 88% by weight (also referred to as 88 wt%) and less than 100 wt%, based on the total weight of said fat replacer composition, said mixture of mono- and diglycerides being in an amount comprised between 8 wt% and 60 wt%, said composition further comprising (or further consisting of) at least one gum for increasing the viscosity, in an amount sufficient for reaching 100% by weight.

Preferably, an edible fat replacer composition comprises (or consists of) water and a mixture of mono- and diglycerides, both components representing more than 80 wt% and less than 100 wt%, based on the total weight of said fat replacer composition, said mixture of mono- and diglycerides being in an amount comprised between 8 wt% and 60 wt%, said composition further comprising (or further consisting of) at least one gum for increasing the viscosity, optionally (or possibly) at least one buffer for maintaining the pH higher than 8, optionally (or possibly) at least one aroma and/or optionally (or possibly) at least one enzyme for simulating the organoleptic properties of triglycerides, in respective amounts for reaching 100 wt% (i.e. each in an amount sufficient to reach a total of 100 wt%).

Said gum(s) is/are preferably in an amount lower than 12 wt%, more preferably comprised between 0.2 wt% and 10 wt%, more preferably comprised between 0.2 wt% and 4 wt%.

Said gum(s) can be selected from the group consisting of microcrystalline cellulose, sodium alginate, locust bean gum, carrageenan, calcium alginate, potassium alginate, propylene glycol alginate, carboxymethylcellulose, methylcellulose, hydroxymethylcellulose, hydroxypropylmethyl cellulose, guar gum, karaya gum, pectin, gelatin carob, tragacanth, arabic and xanthan gum. Preferably, said gum is xanthan gum.

Said buffer(s) is/are preferably in an amount lower than 2 wt%, more preferably comprised between 0.3 wt% and 0.6 wt%.

Said buffer can be selected from the group consisting of sodium carbonate, potassium carbonate, sodium bicarbonate, potassium bicarbonate, sodium phosphate, and potassium phosphate.

Preferably, said buffer(s) is/are sodium carbonate and/or sodium bicarbonate.

Said aroma(s) is/are preferably in an amount lower than 10 wt%, more preferably comprised between 0.15 wt% and 7.5 wt%.

Said enzyme(s) is/are preferably in an amount lower than 2 wt%, more preferably in an amount comprised between 0.005 wt% and 0.5 wt%.

Said enzyme(s) is/are preferably (an) amylase(s), (a) lipase(s) and/or (a) protease(s). More preferably, said enzymes are alpha-amylases.

Preferably, said mixture of mono- and diglycerides is in an amount comprised between 10 wt% and 40 wt%, more preferably in an amount comprised between 10 wt% and 20 wt%.

Preferably, said mixture of mono- and diglycerides is derived from saturated palm oil.

Preferably, said mixture of mono- and diglycerides comprises more than 90 wt% of monoglycerides, based on the total weight of said mixture.

In a preferred composition of the invention, the triglyceride(s) content is less than 3 wt%, preferably less than 1 wt%, more preferably less than 0.5 wt%, even more preferably less than 0.3 wt%, based on the total weight of said composition.

A composition of the invention can further comprise at least one (food) colouring agent, preferably in an amount lower than 2 wt%, preferably lower than 1 wt%.

Said (food) colouring agent(s) can be selected from the group consisting of caramel, tumaric root extract, carotene (mixed carotene, or beta-carotene), annatto, bixin, norbixin, paprika extract, capsanthin, capsorubin, lycopene, curcumin, quinoline yellow, tartrazine, erythrosine, caramel, sulphite-ammonia caramel, Red 2G, and Yellow 2G. Preferably, said colouring agent is beta-carotene.

A composition according to the invention can further comprise sourdough.

A method for making an edible fat replacer composition according to the invention is also provided.

A method of the invention comprises the steps of:
- providing the following components: a mixture of mono- and diglycerides, gum(s), and water, in the respective amounts specified for a composition of the invention,
- heating said water to reach a temperature suitable for melting the mono- and diglycerides,
- adding said gum(s) and said mixture of mono- and diglycerides,
- mixing for obtaining an homogeneous dispersion of the components, and
- cooling.

Preferably, a method of the invention comprises the steps of:
- providing the following components: a mixture of mono- and diglycerides, gum(s), and water, possibly/optionally buffer(s), aroma(s), enzyme(s), colouring agent(s) and/or sourdough, in the amounts respectively specified for a composition of the invention,
- heating said water to reach a temperature suitable for melting the mono- and diglycerides,
- adding, in said water, possibly/optionally said buffer(s), aroma(s), enzyme(s), colouring agent(s) and/or sourdough,
- adding said gum(s) and said mixture of mono- and diglycerides,
- mixing (or blending) for obtaining an homogeneous dispersion of the components, and
- cooling.

In a method according to the invention, the water is preferably heated to a temperature comprised between (about) 40°C and (about) 70°C, more preferably comprised between (about) 45°C and (about) 60°C, even more preferably to a temperature of (about) 50°C.

A method according to the invention can further comprise, before adding said gum(s) and said mixture of mono- and di-glycerides, the step of mixing/blending said water containing possibly buffer (s), aroma (s), enzyme (s), colouring agent (s) and/or sourdough, for obtaining an homogeneous dispersion. In other words, the aqueous solution containing possibly buffer(s), aroma(s), enzyme(s), colouring agent(s) and/or sourdough is blended for obtaining an homogeneous dispersion of all components, before adding said gum(s) and said mixture of mono- and di-glycerides.

A composition according to the invention can be used in a dough, or a batter, to be further baked, steamed, or fried. Preferably, no fat, no shortening, no oil and/or no margarine is/are added. In particular, a composition of the invention replaces, in a recipe, the fat, shortening, oil and/or margarine that was/were to be used, preferably on a one-to-one, gram-for-gram basis.

More particularly, a composition according to the invention can be used for the preparation of food products such as bread, cake, biscuits, pastries, viennoiseries, snacks or pizzas.

The present invention also relates to a food product comprising a composition according to the invention. Preferably, said food product has no added fat, no added shortening, no added oil and no added margarine.

Said food product comprising a composition according to the invention is preferably a baked, steamed, or fried product.

### Detailed description of the invention

In the context of the present invention the term "fat" refers to a lipidic composition made/consisting mainly of triglycerides (i.e. wherein the triglycerides represent more than 50 wt% of said composition, based on the total weight of said composition).

The present invention provides a composition to be used as fat replacer, more particularly as fat substitute.

The present invention provides a fat replacer composition comprising (or consisting of):
- a mixture of mono- and diglycerides,
- at least one gum for increasing the viscosity,
- optionally (possibly) aromas,
- optionally (possibly) at least one enzyme for simulating, at least partially, the organoleptic properties of fats,
- optionally (possibly) a buffer for maintaining the pH above (about) 8,
- optionally (possibly) sourdough, and
- water for the balance, i.e. to reach 100 wt%.

Preferably, in a composition of the invention, water represents at least 30% by weight based on the total weight of said composition (also referred to as 30 wt%), more preferably at least 35 wt%, even more preferably at least 40 wt% based on the total weight of said composition.

The water can be brought with one or more of the ingredients (constituents or components) of a composition according to the invention, with each and all ingredients (which are then diluted/put in water), or can be brought separately.

Preferably, in a composition of the invention, water and said mixture of mono- and diglycerides represent at least 70 wt%, preferably at least 75 wt%, preferably at least 80 wt%, more preferably at least 85 wt%, even more preferably at least 90 wt%, even more preferably at least 95 wt% based on the total weight of said composition.

In particular, in a composition of the invention, said mixture of mono- and diglycerides is in an amount comprised between (about) 8 wt% and (about) 60 wt%, preferably between (about) 8 wt% and (about) 50 wt%, preferably between (about) 10 wt% and (about) 40 wt%, more preferably between (about) 10 wt% and (about) 30 wt%, even more preferably between (about) 10 wt% and (about) 20 wt%.

The other components are in an effective amount, i.e. in a sufficient amount for providing the effect for which they are used.

Preferably, a fat replacer composition of the invention comprises (or consists of):
- a mixture of mono- and diglycerides, in an amount comprised between (about) 8 wt% and (about) 60 wt%, preferably between (about) 8 wt% and (about) 50 wt%, preferably between (about) 10 wt% and (about) 40 wt%, more preferably between (about) 10 wt% and (about) 30 wt%, even more preferably between (about) 10 wt% and (about) 20 wt%,
- at least one gum for increasing the viscosity, in an amount lower than (about) 12 wt% (but not zero), preferably comprised between (about) 0.1 wt% and (about) 10 wt%, preferably between (about) 0.1 wt% and (about) 7 wt%, more preferably between (about) 0.1 wt% and (about) 5 wt%, even more preferably between (about) 0.2 wt% and (about) 4 wt%,
- a buffer for maintaining the pH above (about) 8, preferably between (about) 8.5 and (about) 12, or between (about) 9 and (about) 12, more preferably between (about) 9 and (about) 10, and even more preferably at (about) 9.5 or (about) 9.6, in an amount lower than (about) 2 wt% (but preferably not zero), preferably comprised between (about) 0.3 wt% and (about) 0.6 wt%,
- aromas, in an amount of less than (about) 10 wt% (but preferably not zero), preferably comprised between (about) 0.10 wt% and (about) 7.5 wt%,
- at least one enzyme for simulating, at least partially, the organoleptic properties of fats, in an amount of less than (about) 2 wt%, preferably of less than about 1 wt% (but preferably not zero), more preferably comprised between about 0.005 wt% and about 0.5 wt%,
- optionally sourdough, and
- water for the balance, i.e. to reach 100 wt%.

In a composition according to the invention, having regard to the amounts specified, any combination(s) is/are envisaged.

Preferably, a fat replacer composition according to the invention comprises less than (about) 3 wt% of triglycerides, more preferably less than (about) 2 wt% of triglycerides, more preferably less than (about) 1 wt% of triglycerides, more preferably less than (about) 0.5 wt%, or even more preferably less than (about) 0.3 wt%.

In particular, the triglycerides content in a composition of the invention is preferably comprised between (about) 3 wt% and (about) 0.01 wt%, preferably between (about) 2 wt% and (about) 0.05 wt%, more preferably between (about) 1 wt% and (about) 0.05 wt%, even more preferably between (about) 0.5 wt% and (about) 0.1 wt%

A preferred composition of the invention comprises (about) 0.14 wt% of triglycerides.

More particularly, said triglycerides can come from said mixture of mono- and diglycerides, which may comprise traces of triglycerides (preferably less than 3 wt%).

Preferably, said mixture of mono- and diglycerides comprises more than 90 wt% of monoglycerides.

More particularly, said mixture of mono- and diglycerides comprises (or consists of) more than 90 wt% of monoglycerides, less than 10 wt% of diglycerides and possibly traces of triglycerides. More preferably, in said mixture, the monoglycerides are in an amount comprised between (about) 90 wt% and 96 wt%, and the diglycerides in an amount comprised between (about) 3 wt% and 9 wt%.

The mono- and diglycerides mixture used in a composition of the invention can be provided in a powder form or can be in a liquid form.

Said mono- and diglycerides can be synthesized or can be extracted (from different sources, either animal or vegetable), and possibly further modified (e.g. hydrogenated), according to methods commonly known in this area of technology.

Preferably, said mixture of mono- and diglycerides is derived from saturated palm oil.

In particular, its fatty acids are mainly C16 and C18 saturated fatty acids (C16:0 and C18:0), such as more than (about) 95 wt%, or more than 96 wt% of C16:0 and C18:0, more preferably more than (about) 97 wt%, even more preferably more than (about) 98 wt%, based on the total weight of said mixture of mono- and diglycerides.

Said mono- and diglycerides can be in the alpha crystalline form, in particular when a composition of the invention is used for the preparation of cakes, e.g. to give more volume.

Esters of mono- and diglycerides are not regarded as mono- and diglycerides to be used in a composition of the invention.

A preferred composition according to the invention comprises:
- (about) 14 wt% of mono- and diglycerides (i.e. of a mixture of mono- and diglycerides),
- (about) 0.3 wt% of a gum for increasing the viscosity, such as xanthan gum,
- (about) 0.4 wt% of a buffer for maintaining the pH at about 9, and for favouring the emulsion between said mixture of mono- and diglycerides and water, (e.g. bicarbonate and/or- carbonate),
- (about) 0.15 wt% of aromas for masking the flavours brought by the monoglycerides,
- (about) 0.01 to (about) 1.5 wt% of enzyme for simulating the organoleptic properties of fats (e.g. amylase(s), protease(s) and/or lipase(s)), and
- water added to reach 100 wt% (for the balance).

The fat replacer composition of the invention can be in a paste, semi-solid form (appearance of margarine) or liquid form.

The fat replacer composition of the invention can be regarded as a fat substitute, which can replace the fat in foods on a one-to-one, gram-for-gram basis.

Co-emulsifiers can be added in a composition according to the invention. In the context of the present invention, co-emulsifiers are emulsifiers used for favouring the emulsion between the mono- and diglycerides and the water. Examples of co-emulsifiers are sodium stearoyl-2 lactylate (SSL), calcium stearoyl lactylate (CSL), Diacetyltartaric ester of mono and diglycerides, polysorbate, ethoxylated monoglycerides, lecithin, etc.

Preferably, said co-emulsifiers are added in a composition of the invention in an amount of less than (about) 2 wt%, more preferably in an amount of less than (about) 1 wt%.

Preferably, in a composition of the invention, the gum(s) used do not form a gel. The gum(s) aim(s) at increasing the viscosity of the composition. In particular, said gum(s) allow(s) the different components to remain in suspension during the method for preparing a composition of the invention. Moreover, said gum(s) play(s) also a role in the storage of a composition of the invention by maintaining the components in suspension.

The gum(s) to be used in a composition according to the invention can be selected from the group consisting of microcrystalline cellulose, sodium alginate, locust bean gum, carrageenan, calcium alginate, potassium alginate, propylene glycol alginate, carboxymethylcellulose, methylcellulose, hydroxymethylcellulose, hydroxypropylmethyl cellulose, guar gum, karaya gum, pectin, gelatin carob, tragacanth, arabic and xanthan gum. A preferred gum is xanthan gum.

Preferably, the buffer(s) used in a composition of the invention maintain(s) the pH higher than 8, preferably more than 8.5 or more than 9, and more preferably maintain(s) the pH around 9.5.

A buffer can be selected from the group consisting of bicarbonates (e.g. sodium bicarbonate, potassium bicarbonate, carbonates (e.g. sodium carbonate, potassium carbonate), and phosphates (e.g. of phosphate of sodium, phosphate of potassium).

More particularly, sodium-carbonate and/or sodium-bicarbonate can be used. These buffers favour the emulsion formation between the monoglycerides and water.

Different enzymes for simulating the organoleptic properties of fats/oils can be used in a composition of the invention, and in particular, enzymes providing short bite and moistness characteristics to a soft baked good.

Preferably, said enzymes are amylases (in particular for making the crumb more moist), lipases (preferably for conferring a shorter bite to the baked product) and/or proteases (preferably for improving the extensibility and also for providing a shorter bite).

Preferred amylases can be fungal and/or bacterial alpha-amylases, thermostable amylases, maltogenic amylases, and/or Bacillus amylases, etc.

In a preferred composition of the invention, thermostable alpha-amylases are used.

Preferred lipases can be fungal lipases, phospholipases, Thermomyces lanuginosus lipases, etc.

Preferred proteases can be bacterial proteases, fungal proteases, etc.

Other (bakery) enzymes such as hemicellulases and oxidases can be added.

Preferably, in a composition of the invention, aroma(s) is/are used for masking the eventual light off flavour of monoglycerides.

The composition may also include (further comprise) aroma enhancers or modifiers.

Colouring agents can be added in a composition of the invention. Said optional (food) colouring agent(s) can be any (artificial or natural) yellow "egg" colouring agents.

Said optional colouring agent(s) is/are preferably selected from the group consisting of caramel, tumaric root extract, carotene (mixed carotene, or beta-carotene), annatto, bixin, norbixin, paprika extract, capsanthin, capsorubin, lycopene, curcumin, quinoline yellow, tartrazine, erythrosine, caramel, sulphite-ammonia caramel, Red 2G, and Yellow 2G.

A composition of the invention may further comprise microbial growth inhibitors.

A composition of the invention is not intended for use as frying oil. A composition of the invention can be added to ingredients to form a dough, or a batter, that can be baked, steamed or fried afterwards.

All components (or ingredients) used in a composition of the invention should be suitable for use in an edible food products.

The present invention provides also a method for making a fat replacer composition of the invention.

A method of the invention comprises the steps of:
- providing the following ingredients: said mixture of mono- and diglycerides, gum(s), and water, in the amounts as specified for a composition of the invention,
- heating said water to reach a temperature suitable for melting the mono- and diglycerides used,
- adding said gum(s) and the mixture of mono- and diglycerides,
- mixing/blending for obtaining an homogeneous mixture,
- cooling.

Preferably, a method of the invention comprises the steps of:
- providing the following ingredients: said mixture of mono- and diglycerides, gum(s), buffer(s), aroma(s), enzyme(s), and said water, possibly said colouring agent(s), and/or possibly said sourdough, in the amounts as specified for a composition of the invention,
- heating said water to reach a temperature suitable for melting the mono- and diglycerides used,
- adding, to the warm water, said buffer(s), aroma(s), enzyme(s), possibly said colouring agent(s) and/or possibly said sourdough,
- adding said gum(s) and the mixture of mono- and di- glycerides,
- mixing/blending for obtaining an homogeneous mixture,
- cooling.

More particularly, a method of the invention comprises the steps of:
- providing the following ingredients: said mixture of mono- and diglycerides, gum(s), buffer(s), aroma(s), enzyme(s), and said water, possibly said colouring agent(s) and/or said sourdough, in the amounts as respectively specified for a composition of the invention,
- heating said water to reach a temperature comprised between (about) 30°C and (about) 85°C, preferably comprised between (about) 40°C and (about) 70°C, more preferably comprised between (about) 40°C and (about) 60°C, even more preferably of (about) 50°C,
- adding, in the warm water, said buffer(s), said aroma(s), said enzymes, possibly said colouring agent(s) and/or said sourdough,
- adding said gum(s) and the mixture of mono- and diglycerides,
- mixing/blending for obtaining an homogeneous mixture,
- cooling.

Preferably, for obtaining more easily a homogeneous mixture, the gum(s) and the mono- and diglycerides are added after the buffer(s), aroma(s), enzyme(s), and, if any, said colouring agent(s), and/or said sourdough.

Preferably, after adding, in the warm water, said buffer(s), aroma(s), and if any said colouring agent(s) and/or said sourdough, and before adding said gum(s) and said mono- and diglycerides, the aqueous mixture is blended/mixed for an homogeneous dispersion of the components.

Preferably, the mixture is cooled to a temperature between 30°C and 1°C, more preferably to a temperature between 20°C and 10°C, more preferably at ambient temperature, more particularly at about 15°C.

The composition is then brought into the packaging and maturates further during its storage.

After few days, the product of the invention (or the (packed) composition of the invention) reaches its final consistency.

A composition according to the invention can be used for cooking, or baking. Preferably, a composition according to the invention can be used for preparing a dough or a batter to be baked, steamed or fried.

A composition according to the invention can be used in/for the preparation of food products such as bread, cake, biscuits, pastries, viennoiseries, snacks, or pizzas. Advantageously, said composition can be used for the preparation of food products with no added fat from animal or vegetal origin, no added shortening, no added oil and no added margarine.

The invention will be described in further details in the following examples, which are intended for illustration purposes only, and should not be construed as limiting the scope of the invention in any way.

### EXAMPLES

### Example 1: Preparation of a composition according to the invention.

The ingredients, as listed in table 1, are provided.

**Table 1**

| **Ingredients** | **amount (wt%)** |
|---|---|
| mono- and diglycerides (produced from saturated palm oil) | 14 |
| xanthan gum | 0.3 |
| sodium carbonate + sodium bicarbonate | 0.4 |
| aromas | 0.15 |
| thermostable alpha-amylase | 0.01 |
| beta-carotene | 0.13 |
| water | 85.01 |

The water is heated to reach a temperature of about 50°C.

Once the temperature has been reached, the buffer, the colouring agent, the aroma are added and blended intensively.

Thereafter the gum and the mixture of mono- and diglycerides are added to the aqueous phase and blended, for obtaining a homogeneous composition, for about 15 minutes.

Thereafter the composition is cooled to room temperature, in this case to about 15°C.

The pH of the composition is higher than 9. The composition obtained is stable.

The composition is then brought for the packaging.

The composition crystallizes further during the storage of the product. After about 4 days, the product reaches a final solid consistency.

The composition can be stored at room temperature (at ambient, ordinary temperature).

### Example 2: preparation of soft rolls.

A sandwich roll is prepared following a recipe that contained 15% Margarine on flour weight, and wherein the Margarine is replaced completely with the fat replacer composition of the invention.

The ingredients for the standard recipe (R2) and the fat replacer recipe (1) are listed in table 2:

**Table 2**

| | R1: with Fat replacer composition | R2: with Margarine | R3: with no margarine and no fat replacer composition |
|---|---|---|---|
| Flour (wheat flour) | 2000 | 2000 | 2000 |
| Water | 680 | 740 | 990 |
| fresh yeast | 140 | 140 | 140 |
| Salt | 40 | 40 | 40 |
| Sugar | 300 | 300 | 300 |
| Eggs | 160 | 160 | 160 |
| liquid wheat sourdough (Carmen DW20®) | 100 | - | - |
| Powdered dough conditioner (Soft'r Alpaga®) | 40 | 40 | 40 |
| Margarine (Aristo®) | - | 300 | - |
| Fat replacer composition | 300 | - | - |

The ingredients are mixed in a mixer (Diosna SP24 spiral) during 3 minutes at slow speed and 7 minutes at fast speed. The final temperature of the dough is 26°C.

A bulk proof of 3 minutes is given to the dough after the mixing. Thereafter the dough is divided (with a Konig Minirex GS 200) into pieces of 60 grams rounded and elongated after 8 minutes intermediate proof.

The dough pieces are laid on a sheeting pan and are proofed for 140 minutes at 35°C with a relative humidity of 90%.

After proofing, the products are sprayed with egg wash and baked for 9 minutes at 220°C without steam. These products are cooled down for 35 minutes and are packed.

The products resulting from recipes R1 and R2 have been analysed for determining their lipid content with a Soxhlet extraction using diethyl ether as solvent.

The standard baked product with margarine (resulting from recipe R2) has a lipid content of 8.47 % by weight (based on the total weight of the baked product).

The baked soft product with the fat replacer composition of the invention has a lipid content of 1.06 % by weight (based on the total weight of the baked product). This is less than 3 wt% and as such the baked soft product obtained with recipe R1 (i.e. with the fat replacer composition of the invention) is a low fat product in accordance with the Regulation (EC) No 1924/2006 of the European Parliament and the Council of December 20, 2006 (O.J. 18.1.2007, L12/3). Using the fat replacer composition of the invention, the baked product is reduced in lipid content by 87%.

These baked products (resulting from the 3 recipes) have also been tested in a sensorial analysis with consumers in Ghent (Belgium). 504 consumers participated in the test; 60% were female.

Questions were asked to the consumers concerning their buying habits, their appreciation, and their preferences.

Products were tested once blind and once with the information on the lipid content.

The results of the test can be summarized as follows:

The baked product of the invention is as tasty as the baked product with Margarine. And both baked products resulting from R1 and R2 are found better than the soft rolls obtained with R3. In particular, consumers who daily eat soft rolls, prefer these two baked products resulting from R1 and R2.

Neither the sex nor the age of the consumers had an influence on the preferences.

Their buying intentions and their preference for the baked product resulting from R1 (i.e. the baked product of the invention) increased even more when the test has been done with the information on the lipid content of the products.

### Example 3: Fat replacer composition in a cake

A cake is prepared following a recipe that contained oil (control), which is replaced completely with the fat replacer composition of the invention.

The ingredients for the standard recipe (control) and for the fat replacer recipe are listed in table 3.

**Table 3**

| | **Fat replacer composition** | **Control** |
|---|---|---|
| Moist R' Cake® blend | 100 | 100 |
| Oil | 0 | 30 |
| Fat replacer composition | 30 | 0 |
| Eggs (whole liquid) | 35 | 35 |
| Water | 22.5 | 22.5 |

Moist R' Cake® blend is a cake mix for pound cakes, slabs and muffin, containing sugar, enriched wheat flour, modified corns, whey powder, vegetable (canola and/or soya) oil, baking powder, salt, wheat starch, natural and artificial flavours.

The ingredients are placed in a mixing bowl and blended together for 1 minute on slow (at slow speed) and 6 minutes on medium (at medium speed).

The batter is scraped down 1 in the middle of the mixing.

Pound cakes are scaled in recipients at 500 grams. Thereafter the product is baked in a deck oven at 175°C for 46 minutes.

The cake made with the fat replacer composition of the invention has the same volume and crumb structure as the control cake.

A sensorial analysis of the product showed that there was no significant difference between the control and the product made with the fat replacer composition of the invention.

The control cake contains 21% of lipids and the cake made with the fat replacer composition of the invention contains 7% of lipids. That is a reduction of 66% of the lipids against the control product.

## Claims

1. An edible fat replacer composition comprising water and a mixture of mono- and diglycerides, both components representing more than 88% by weight and less than 100% by weight, based on the total weight of said fat replacer composition, said mixture of mono- and diglycerides being in an amount comprised between 8 wt% and 60 wt%, said composition further comprising at least one gum for increasing the viscosity in an amount sufficient for reaching 100% by weight.

2. An edible fat replacer composition comprising water and a mixture of mono- and diglycerides, both components representing more than 80% by weight and less than 100% by weight, based on the total weight of said fat replacer composition, said mixture of mono- and diglycerides being in an amount comprised between 8 wt% and 60 wt%, said composition further comprising at least one gum for increasing the viscosity, optionally at least one buffer for maintaining the pH higher than 8, optionally at least one aroma and/or optionally at least one enzyme for simulating the organoleptic properties of triglycerides, in an amount sufficient for reaching 100% by weight.

3. A composition according to claim 1 or 2, wherein said gum(s) is/are in an amount lower than 12 wt%, preferably comprised between 0.2 wt% and 10 wt%, more preferably comprised between 0.2 wt% and 4 wt%.

4. A composition according to claim 2 or 3, wherein said buffer(s), is/are in an amount lower than 2 wt%, preferably comprised between 0.3 wt% and 0.6 wt%.

5. A composition according to any of claims 2 to 4, wherein said aroma(s) is/are in an amount lower than 10 wt%, preferably comprised between 0.15 wt% and 7.5 wt%.

6. A composition according to any of claims 2 to 5, wherein said enzyme(s) is/are in an amount lower than 2 wt%, preferably in an amount comprised between 0.005 wt% and 0.5 wt%.

7. A composition according to any of claims 1 to 6, wherein said mixture of mono- and diglycerides is in an amount comprised between 10 wt% and 40 wt%.

8. A composition according to any of claims 1 to 7, wherein the triglyceride(s) content is less than 3 wt%, preferably less than 1 wt%, based on the total weight of said composition.

9. A composition according to any of claims 1 to 8, further comprising at least one colouring agent.

10. A composition according to claim 9, wherein said colouring agent(s) is/are in an amount lower than 2 wt%, preferably lower than 1 wt%.

11. A composition according to claim 9 or 10, wherein said colouring agent(s) is/are selected from the group consisting of caramel, tumaric root extract, carotene (mixed carotene, or beta-carotene), annatto, bixin, norbixin, paprika extract, capsanthin, capsorubin, lycopene, curcumin, quinoline yellow, tartrazine, erythrosine, caramel, sulphite-ammonia caramel, Red 2G, and Yellow 2G.

12. A composition according to claim 11, wherein said colouring agent is beta-carotene.

13. A composition according to any of claims 1 to 12, wherein said mixture of mono- and diglycerides is derived from saturated palm oil.

14. A composition according to any of claims 1 to 13, wherein said mixture of mono- and diglycerides comprises more than 90 wt% of monoglycerides, based on the total weight of said mixture.

15. A composition according to any of claims 1 to 14, wherein said gum(s) is/are selected from the group consisting of microcrystalline cellulose, sodium alginate, locust bean gum, carrageenan, calcium alginate, potassium alginate, propylene glycol alginate, carboxymethylcellulose, methylcellulose, hydroxymethylcellulose, hydroxypropylmethyl cellulose, guar gum, karaya gum, pectin, gelatin carob, tragacanth, arabic and xanthan gum.

16. A composition according to claim 15, wherein said gum is xanthan gum.

17. A composition according to any of claims 2 to 16, wherein said buffer(s) is/are selected from the group consisting of sodium carbonate, potassium carbonate, sodium bicarbonate, potassium bicarbonate, sodium phosphate, and potassium phosphate.

18. A composition according to claim 17, wherein said buffer is sodium carbonate and/or sodium bicarbonate.

19. A composition according to any of claims 1 to 18, wherein said enzyme(s) is/are (an) amylase(s), (a) lipase(s) and/or (a) protease(s)*.*

20. A composition according to any of claims 16, wherein said amylase(s) are alpha-amylase(s).

21. A composition according to any of claims 1 to 17, further comprising sourdough.

22. A method for making an edible fat replacer composition comprising the steps of:
- providing the following components: a mixture of mono- and diglycerides, gum(s), and water, optionally buffer(s), aroma(s), enzyme(s), colouring agent(s) and/or sourdough, in the respective amounts as specified in any of claims 1 to 21,
- heating said water to reach a temperature suitable for melting the mono- and diglycerides,
- adding, in said water, possibly/optionally said buffer(s), aroma(s), enzyme(s), colouring agent(s) and/or sourdough,
- adding said gum(s) and said mixture of mono- and diglycerides,
- mixing for obtaining an homogeneous dispersion of the components, and
- cooling.

23. A method according to claim 22, wherein the water is heated to a temperature comprised between 40°C and 70°C, preferably comprised between 45°C and 60°C.

24. A method according to claim 22 or 23, further comprising, before adding said gum(s) and said mixture of mono- and diglycerides, the step of mixing said water containing possibly buffer(s), aroma(s), enzyme(s), colouring agent(s) and/or sourdough, for obtaining an homogeneous dispersion.

25. Use of a composition according to any of claims 1 to 21 in a dough, or a batter, for baking, steaming, or frying.

26. Use of a composition according to any of claims 1 to 21 for the preparation of baked goods such as bread, cake, biscuits, pastries, viennoiseries, snacks or pizzas.

27. A food product comprising a composition according to any of claims 1 to 21.

28. A food product according to claim 27 with no added fat, no added shortening, no added oil and no added margarine.

29. A baked, steamed, or fried product comprising a composition according to any of claims 1 to 21.

30. A baked, steamed, or fried product according to claim 29 with no added fat, no added shortening, no added oil and no added margarine.
